(19) Europäisches Patentamt
European Patent Office
Office européen des brevets

(11) Veröffentlichungsnummer : **0 062 795**
**B1**

(12) # EUROPÄISCHE PATENTSCHRIFT

(45) Veröffentlichungstag der Patentschrift : **13.06.84**

(51) Int. Cl.³ : **C 03 B 35/16**

(21) Anmeldenummer : **82102424.7**

(22) Anmeldetag : **24.03.82**

(54) **Anlage für die Behandlung von warmen und/oder zu erwärmenden Glasscheiben.**

(30) Priorität : **03.04.81 DE 3113409**

(43) Veröffentlichungstag der Anmeldung : **20.10.82 Patentblatt 82/42**

(45) Bekanntmachung des Hinweises auf die Patenterteilung : **13.06.84 Patentblatt 84/24**

(84) Benannte Vertragsstaaten : **AT BE CH FR GB IT LI LU NL SE**

(56) Entgegenhaltungen :
**US-A- 4 057 411**
**US-A- 4 133 667**

(73) Patentinhaber : **Frielingsdorf, Horst**
**Am Meisenhort 2**
**D-5630 Remscheid 11 (DE)**

(72) Erfinder : **Frielingsdorf, Horst**
**Am Meisenhort 2**
**D-5630 Remscheid 11 (DE)**

(74) Vertreter : **Andrejewski, Walter et al**
**Patentanwälte Andrejewski, Honke & Partner Postfach 10 02 54 Theaterplatz 3**
**D-4300 Essen 1 (DE)**

**EP 0 062 795 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich gattungsgemäß auf eine Anlage für die Behandlung von warmen und/oder zu erwärmenden Glasscheiben, insbesondere auf eine Vorspannanlage für Glasscheiben, mit zumindest einer Behandlungsstation, die einen Rollenrost mit einer Mehrzahl von Auflagerrollen aufweist, und mit einer Einreichung zur Verhinderung des Durchhängens der zu behandelnden Glasscheiben zwischen benachbarten Auflagerrollen.

Bei dieser Anlage bewegen sich die Auflagerrollen mit einer vorgegebenen Winkelgeschwindigkeit, die bekanntlich aus der Umdrehungszahl pro Zeiteinheit ableitbar ist. Wird sie im Bogenmaß gemessen, so gibt das Produkt aus Radius der Auflagerrollen mal Winkelgeschwindigkeit die translatorische Geschwindigkeit an, die am Rollenumfang abgenommen werden kann. Im übrigen müssen sich die Glasscheiben in der Anlage mit einer vorgegebenen von der gewünschten Behandlung abhängigen Transportgeschwindigkeit bewegen. Es versteht sich von selbst, daß die Transportgeschwindigkeit auch null sein kann, der Transport also für eine vorgegebene Zeitdauer gestoppt werden kann. Der Ausdruck Auflagerrollen umfaßt auch Auflagerwalzen. Handelt es sich bei der Anlage für die Behandlung der warmen oder zu erwärmenden Glasscheiben um Vorspannanlagen, so gehören zu einer solchen Anlage im allgemeinen zumindest zwei Behandlungsstationen, nämlich einerseits eine Wärmestation mit Ofen und andererseits eine Kühlstation oder Härtestation mit Kühleinrichtung oder Abschreckeinrichtung.

Bei den bekannten gattungsgemäßen Anlagen (DE-C-704219) werden die Glasscheiben in die Behandlungsstation bzw. in die Behandlungsstationen mit einer gleichsinnigen, translatorischen Transportgeschwindigkeit vorgegebener Größe eingeführt. Die Einrichtung zur Verhinderung des Durchhängens der zu behandelnden Glasscheiben zwischen benachbarten Auflagerrollen besteht aus Mitteln zur Hin- und Herbewegung der Auflagerrollen. Ist die Behandlung abgeschlossen, so wird diese hin- und hergehende Bewegung wieder abgeschaltet, die Auflagerrollen bewegen sich mit einer vorgegebenen Transportgeschwindigkeit und die behandelten Glasscheiben werden aus der Behandlungsstation herausgeführt. Auf diese Weise mag es gelingen, zu verhindern, daß die Glasscheiben zwischen den Auflagerrollen durchhängen und sich in störendem Maße verformen. Das alles ist aber nicht frei von Nachteilen : Tatsächlich kann die Behandlung in den Behandlungsstationen nicht mehr kontinuierlich erfolgen. Sie erfolgt vielmehr diskontinuierlich mit Transportpausen in den Behandlungsstationen, wobei während der Transportpausen die Auflagerrollen sich in der beschriebenen Weise hin- und hergehend bewegen. Die bekannten Maßnahmen verlangen daher einen sehr hohen anlagetechnischen Aufwand. Bei vorgegebener Kapazität muß eine Mehrzahl von Behandlungsstationen parallel geschaltet werden. Beim Abtransport ist immer noch ein durchhängendes Verformen der Glasscheiben zwischen benachbarten Auflaferrollen möglich, wenn die Glasscheiben entsprechend hohe Temperatur aufweisen, beispielsweise einen Behandlungsofen verlassen.

In der Praxis sind auch Anlagen für die Behandlung von warmen bzw. zu erwärmenden Glasscheiben und insbesondere Vorspannanlagen für Glasscheiben gebräuchlich, bei denen die Auflagerrollen nur mit einer gleichsinnigen Transportwinkelgeschwindigkeit bewegbar sind, wenn auch in unterschiedlichen Geschwindigkeitsstufen und mit Unterbrechung. Auch dann besteht die Gefahr des Durchhängens oder Durchbiegens der Glasscheiben zwischen den Auflagerrollen. Um diese Gefahr zu mindern, müssen die Transportgeschwindigkeiten verhältnismäßig hoch gewählt werden, was wiederum entsprechend lange Behandlungsstationen und insbesondere entsprechend lange Durchlauföfen erforderlich macht.

Der Erfindung liegt die Aufgabe zugrunde, eine gattungsgemäße Anlage so weiter auszubilden, daß für die zu behandelnden Glasscheiben in den Behandlungsstationen ein kontinuierlicher Transport mit vorgegebener Transportgeschwindigkeit möglich ist, und zwar ohne daß sich die Glasscheiben zwischen den Auflagerrollen durchhängend verformen.

Zur Lösung dieser Aufgabe lehrt die Erfindung, daß der Rollenrost der gattungsgemäße Anlage als endlos über Umlenkräder oder dergleichen geführtes Rollenrostband mit Auflagertrum und Rücklauftrum ausgeführt ist, welches Rollenrostband mit einer translatorischen Rostgeschwindigkeit $v_{rost}$ endlos umlaufend angetrieben ist und daß die Auflagerrollen ihrerseits mit einer Winkelgeschwindigkeit w antreibbar sind, deren Produkt mit einem Radius R der Auflagerrollen, wR, dem Betrage nach von der Rostgeschwindigkeit $v_{rost}$ unterschiedlich, der Richtung nach der Rostgeschwindigkeit $v_{rost}$ entgegengesetzt ist, wobei die Differenz $v_{rost} - wR$ bei $v_{rost} > wR$ die Transportgeschwindigkeit $v_{trans}$ der Glasscheiben in Umlaufrichtung des Rollenrostbandes, die Differenz $wR - v_{rost}$ bei $v_{rost} < wR$ die Transportgeschwindigkeit $V_{trans}$ der Glasscheiben entgegen der Umlaufrichtung des Rollenrostbandes bestimmt.

Bei einer erfindungsgemäßen Anlage kann der Antrieb der Auflagerrollen mit der angegebenen Winkelgeschwindigkeit auf verschiedene Weise erfolgen. Grundsätzlich können die einzelnen Auflagerrollen mit entsprechenden Antrieben ausgerüstet sein. Die Steuerung dieser Antriebe erfolgt dann mit den Hilfsmitteln der modernen Steuerungs- und Antriebstechnik ohne Schwierigkeiten. Weniger aufwendig und insbesondere für hohe Temperaturen in der Behandlungsstation bzw. in den Behandlungsstationen geeignet ist eine Ausführungsform, die dadurch gekennzeichnet ist, daß sich die Auflagerrollen im Auflagertrum an einer Abwälzbahn abwälzen, die ebenfalls als endloses Band über Umlenkräder oder dergleichen geführt ist, und daß die endlose Abwälzbahn mit einer translatorischen Abwälzbahngeschwindigkeit $v_{abw}$ angetrieben ist. Verwirklicht man bei dieser Ausführungsform die Verhältnisse so, daß die Auflagerrollen sich mit einem Umfang, dessen Radius dem Auflagerradius R entspricht, an der Abwälzbahn abwälzen und daß die Abwälzbahn im Kontaktbereich mit den Auflagerrollen gleichsinnig zum Rollenrostband angetrieben ist, so erreicht man ohne weiteres, daß die Glasscheiben mit einer Transportgeschwindigkeit $v_{trans}$ bewegt werden, die Umlaufrichtung des Rollenrostbandes mit der translatorischen Geschwindigkeit der Abwälzbahn übereinstimmt. Wenn die Auflagerrollen sich mit einem Umfang, dessen Radius dem Auflagerradius entspricht, an der Abwälzbahn abwälzen und die Abwälzbahn im Kontaktbereich mit den Auflagerrollen gegensinnig zum Rollenrostband angetrieben ist, so erreicht man eine Transgeschwindigkeit $v_{trans}$ der Glasscheiben entgegen der Umlaufrichtung des Rollenrostbandes, die dem Betrage nach wiederum mit der translatorischen Abwälzbahngeschwindigkeit $v_{abw}$ übereinstimmt. Beide letztbeschriebenen Ausführungsformen einer erfindungsgemäßen Anlage zeichnen sich folglich durch antriebstechnische und steuerungstechnische Einfachheit aus. Wenn die Auflagerrollen sich mit einem Umfang an der Abwälzbahn abwälzen, dessen Radius nicht dem Auflagerradius entspricht, so ist bei der Kinematik der Zusammenhänge das durch die unterschiedlichen Radien definierte Übersetzungsverhältnis zu berücksichtigen. Es versteht sich von selbst, daß die Auflagerrollen zum Zwecke des Abwälzens mit Bauteilen versehen sind, die dieses Abwälzen zulassen. Beispielsweise kann die Abwälzbahn als endlos umlaufende Kette ausgeführt sein und können die Auflagerrollen einen Zahnkranz aufweisen, dessen Teilkreis nach Maßgabe des gewählten Abwälzumfanges eingerichtet ist. Man kann aber auch die Auflagerrollen insoweit mit besonderen Rollenabschnitten versehen, deren Durchmesser nach Maßgabe des gewählten Abwälzumfanges eingerichtet ist. Um unterschiedliche Transportgeschwindigkeiten für die zu behandelnden Glasscheiben zu verwirklichen, ist es lediglich erforderlich, die Rostgeschwindigkeit $v_{rost}$ einerseits und/oder die Abwälzbahngeschwindigkeit $v_{abw}$ andererseits betriebsmäßig einstellbar zu machen. Es versteht sich von selbst, daß die Verhältnisse auch so gewählt werken können, daß eine zu behandelnde Glasscheibe in einer Behandlungsstation über einen vorgegebenen Zeitabschnitt stillsteht.

Die erreichten Vorteile sind darin zu sehen, daß bei einer erfindungsgemäßen Anlage die zu behandelnden Glasscheiben in der Behandlungsstation bzw. in den Behandlungsstationen mit genau vorgegebenen und dem angestrebten Behandlungsergebnis anpaßbaren Transportgeschwindigkeiten bewegt werden können. Ein Durchhängen der Glasscheiben ist ausgeschlossen, weil das Rollenrostband mit einer translatorischen Rostgeschwindigkeit endlos umlaufend angetrieben ist, die so groß gewählt wird, daß die zu behandelnden Glasscheiben zwischen benachbarten Auflagerrollen nicht durchhängen können.

Im folgenden werden die Erfindung und die kinematischen Zusammenhänge anhand einer lediglich ein Ausführungsbeispiel darstellenden Zeichnung ausführlicher erläutert. Es zeigen in schematischer Darstellung :

Figur 1 die Seitenansicht einer erfindungsgemäßen Anlage für die Behandlung von warmen und/oder zu erwärmenden Glasscheiben,

Figur 2 den vergrößerten Ausschnitt A aus dem Gegenstand nach Fig. 1, und

Figur 3 entsprechend der Fig. 2 eine andere Ausführungsform einer erfindungsgemäßen Anlage.

Die in den Figuren dargestellte Anlage ist für die Behandlung von warmen und/oder zu erwärmenden Glasscheiben 1 bestimmt und beispielsweise als Vorspannanlage ausgeführt. Sie ist ausgerüstet mit zumindest einer Behandlungsstation, die einen Rollenrost 2 mit einer Mehrzahl von Auflagerrollen 3 von Radius R aufweist und mit einer Einrichtung zur Verhinderung des Durchhängens der zu behandelnden Glasscheiben 1 zwischen benachbarten Auflagerrollen 3.

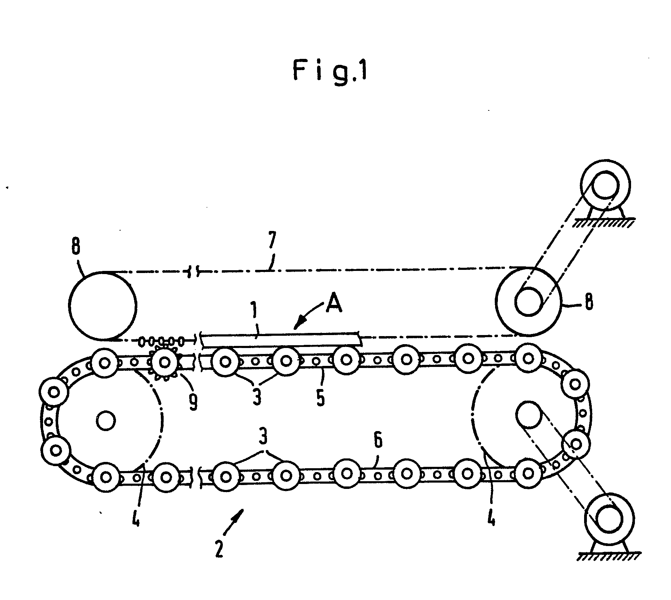

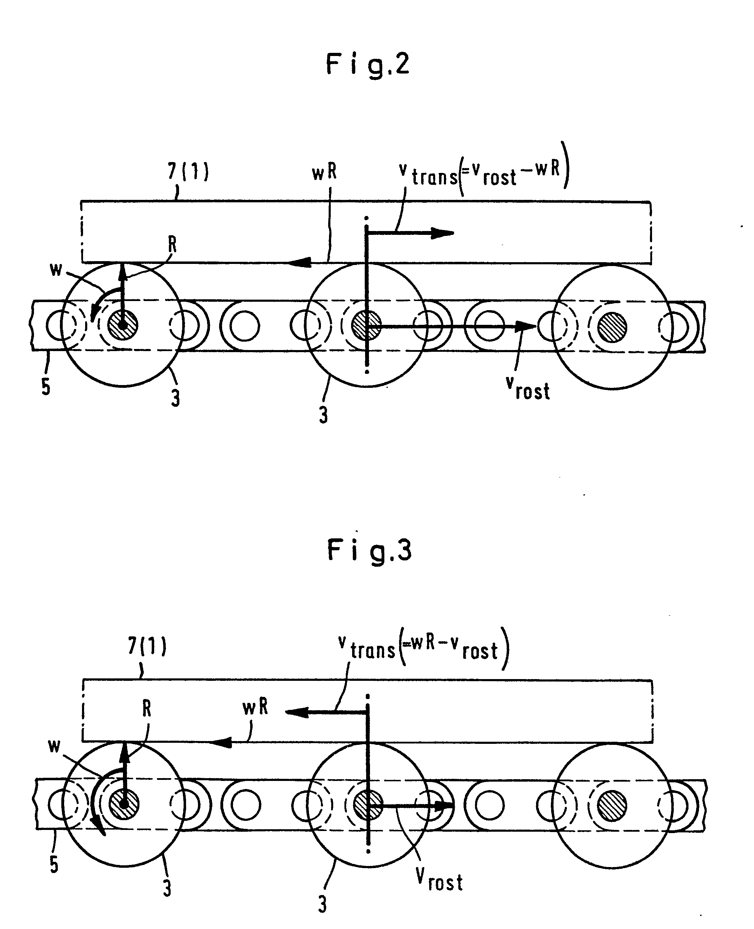

Aus der Fig. 1 entnimmt man zunächst, daß der Rollenrost als endlos über Umlenkräder 4 oder dergleichen geführtes Rollenrostband 2 mit Auflagertrum 5 und Rücklauftrum 6 ausgeführt ist. Dieses Rollenrostband 2 ist mit einer translatorischen Rostgeschwindigkeit $v_{rost}$ endlos umlaufend angetrieben, wie es die eingezeichneten Pfeile verdeutlichen. Diese translatorische Rostgeschwindigkeit $v_{rost}$ ist so groß gewählt, daß die zu behandelnden Glasscheiben 1, die im übrigen den weiter unten behandelten kinematischen Bedingungen unterworfen werden, nicht durchhängen können. Die Auflagerrollen 3 sind aber ihrerseits angetrieben, und zwar mit einer Winkelgeschwindigkeit w, deren Produkt mit dem Radius R der Auflagerrollen wR, dem Betrage nach von der Rostgeschwindigkeit $v_{rost}$ unterschiedlich ist. Das ergibt sich aus einer vergleichenden Betrachtung der Fig. 2 und 3. Die Richtung des Produktes aus Winkelgeschwindigkeit w und Radius R der Auflagerrollen 3 ist jedoch der Richtung nach der Rostgeschwindigkeit $v_{rost}$ entgegengesetzt. Aus einer vergleichenden Betrachtung der Fig. 2 und 3 entnimmt man, daß die Differenz $v_{rost} - wR$ bei $v_{rost} > wR$ die Transportgeschwindigkeit $v_{trans}$ der Glasscheiben in Umlaufrichtung des Rollenrostbandes (Fig. 2), die Differenz $wR - v_{rost}$ bei $v_{rost} < wR$ die Transportgeschwindigkeit $v_{trans}$ der Glasscheiben entgegen der Umlaufrichtung des Rollenrostbandes 2 bestimmen.

Im Ausführungsbeispiel ist dargestellt worden, wie der Antrieb der Auflagerrollen 3 mit Hilfe einer Abwälzbahn 7 erfolgt. Man erkennt, daß sich die Auflagerrollen 3 im Auflagertrum 5 an einer Abwälzbahn 7 abwälzen, die ebenfalls als endloses Band über Umlenkräder 8 und dergleichen geführt ist, wobei die endlose Abwälzbahn 7 mit einer translatorischen Abwälzbahngeschwindigkeit $v_{abw}$ angetrieben ist.

In den Fig. 2 und 3 erkennt man zunächst die Glasscheibe 1, die auf den Auflagerrollen 3 aufliegt und die sich mit der als Vektor eingezeichneten Transportgeschwindigkeit $v_{trans}$ in der Fig. 2 nach rechts, in der Fig. 3 nach links bewegt.

Die Fig. 2 und 3 ermöglichen aber auch eine Verdeutlichung einer bevorzugten Ausführungsform der Erfindung, bei der die kinematischen Zusammenhänge besonders einfach sind. Dazu nehme man an, daß die in den Fig. 2 und 3 mit den Bezugszeichen der Glasscheiben 1 versehenen Gegenstände nicht Glasscheiben, sondern vielmehr ein Teilstück der Abwälzbahn 7 darstellen (aus welchem Grunde diese Bezugszeichen in die Fig. 2 und 3 bei den genannten Gegenständen in Klammern eingesetzt sind). Die Glasscheiben 1 mögen hinter diesen Abwälzbahnabschnitten 7 unsichtbar sein. Dann ist in den Fig. 2 und 3 offenbar eine Situation dargestellt worden, bei der die Auflagerrollen 3 sich mit einem Umfang, dessen Radius dem Auflagerradius R entspricht, an der Abwälzbahn 7 abwälzen. Ist die Abwälzbahn 7 im Kontaktbereich mit den Auflagerrollen 3, wie in Fig. 2, gleichsinnig zum Rollenrostband 2 angetrieben, so bestimmt die Abwälzbahngeschwindigkeit $v_{abw}$ offenbar die Transportgeschwindigkeit $v_{trans}$ der Glasscheiben 1 in Richtung des Rollenrostbandes 2. Ist umgekehrt, wie in Fig. 3 dargestellt wurde, die Abwälzbahn 7 gegensinnig zum Rollenrostband 2 angetrieben, so bestimmt hier die Abwälzbahngeschwindigkeit $v_{abw}$ die Transportgeschwindigkeit $v_{trans}$ der Glasscheiben 1 entgegen der Bewegungsrichtung des Rollenrostbandes 2. Die Rollenrostgeschwindigkeit $v_{rost}$ sowie die Abwälzbahngeschwindigkeit $v_{abw}$ sind zweckmäßigerweise betriebsmäßig einstellbar, wodurch die erfindungsgemäße Anlage den unterschiedlichsten Betriebsverhältnissen angepaßt werden kann, und zwar sowohl in bezug auf eine Vermeidung des Durchhängens zu behandelnder Glasscheiben 1 zwischen den einzelnen Auflagerrollen 3, was durch die Geschwindigkeit $v_{rost}$ des Rollenrostbandes 2 bestimmt wird, als auch in bezug auf die Behandlungsdauer in einer Behandlungsstation, d. h. in bezug auf die Transportgeschwindigkeit $v_{trans}$.

In Fig. 1 links ist angedeutet worden, daß die Abwälzbahn 7 als endlos umlaufende Kette ausgeführt ist und die Auflagerrollen 3 einen Zahnkranz 9 aufweisen, dessen Teilkreis dem Umfang der Auflagerrollen 3 entspricht.

**Ansprüche**

1. Anlage für die Behandlung von warmen und/oder zu erwärmenden Glasscheiben, insbesondere Vorspannlage für Glasscheiben, mit zumindest einer Behandlungsstation, die einen Rollenrost mit einer Mehrzahl von Auflagerrollen aufweist, und mit einer Einrichtung zur Verhinderung des Durchhängens der zu behandelnden Glasscheiben zwischen benachbarten Auflagerrollen, dadurch gekennzeichnet, daß der Rollenrost als endlos über Umlenkräder (4) oder dergleichen geführtes Rollenrostband (2) mit Auflagertrum (5) und Rücklauftrum (6) ausgeführt ist, welches Rollenrostband (2) mit einer translatorischen Rostgeschwindigkeit $v_{rost}$ endlos umlaufend antreibbar ist, und daß die Auflagerrollen (3) ihrerseits mit einer Winkelgeschwindigkeit w antreibbar sind, deren Produkt mit dem Radius R der Auflagerrollen (3), wR, dem Betrage nach von der Rostgeschwindigkeit $v_{rost}$ unterschiedlich, der Richtung nach der Rostgeschwindigkeit $v_{rost}$ entgegengesetzt ist, wobei die Differenz $v_{rost} - wR$ bei $v_{rost} > wR$ die Transportgeschwindigkeit $v_{trans}$ der Glasscheiben (1) in Umlaufrichtung des Rollenrostbandes (2), die Differenz $wR - v_{rost}$ bei $v_{rost} < wR$ die Transportgeschwindigkeit $v_{trans}$ der Glasscheiben entgegen der Umlaufrichtung des Rollenrostbandes (2) bestimmt.

2. Anlage nach Anspruch 1, dadurch gekennzeichnet, daß sich die Auflagerrollen (3) im Auflagertrum (5) zum Zwecke des Antriebs an einer Abwälzbahn (7) abwälzen, die ebenfalls als endloses Band über Umlenkräder (8) oder dergleichen geführt ist, und daß die endlose Abwälzbahn (7) mit einer translatorischen Abwälzbahngeschwindigkeit $v_{abw}$ angetrieben ist.

3. Anlage nach Anspruch 2, dadurch gekennzeichnet, daß die Auflagerrollen (3) sich mit einem Umfang, dessen Radius dem Auflagerradius R entspricht, an der Abwälzbahn (7) abwälzen und daß die Abwälzbahn (7) im Kontaktbereich mit den Auflagerrollen (3) gleichsinnig zum Rollenrostband (2) angetrieben ist, wobei die Abwälzbahngeschwindigkeit $v_{abw}$ der Transportgeschwindigkeit $v_{trans}$ der Glasscheiben (1) in Richtung der translatorischen Rostgeschwindigkeit $v_{rost}$ des Rollenrostbandes (2) im Auflagertrum (5) entspricht.

4. Anlage nach Anspruch 2, dadurch gekennzeichnet, daß die Auflagerrollen (3) sich mit einem Umfang, dessen Radius dem Auflagerradius R entspricht, an der Abwälzbahn (7) abwälzen und daß die Abwälzbahn (7) im Kontaktbereich mit den Auflagerrollen (3) gegensinnig zum Rollenrostband (2) angetrieben ist, wobei die Abwälzbahngeschwindigkeit $v_{abw}$ mit der Transportgeschwindigkeit $v_{trans}$ der Glasscheiben (1) entgegengesetzt zur translatorischen Rostgeschwindigkeit $v_{rost}$ des Rollenrostbandes (2) im Auflagertrum (5) übereinstimmt.

5. Anlage nach einem der Ansprüche 1 bis 4, dadurch gekennzeichnet, daß die Rostgeschwindigkeit $v_{rost}$ und/oder die Abwälzbahngeschwindigkeit $v_{abw}$ betriebsmäßig einstellbar sind.

6. Anlage nach einem der Ansprüche 1 bis 5, dadurch gekennzeichnet, daß die Abwälzbahn (7)

als endlos umlaufende Kette ausgeführt ist und die Auflagerrollen (3) einen Zahnkranz aufweisen, dessen Teilkreis nach Maßgabe des gewählten Abwälzumfanges eingerichtet ist.

**Claims**

1. An installation for the manipulation of panes of glass that are hot and/or are to be heated, particularly an installation for pre-stressing panes of glass, with at least one manipulation station which features a roll-deck with a plurality of support rolls, and with equipment to prevent sagging between adjacent support rolls of the panes of glass being manipulated, characterized in that the roll-deck is constructed as an endless roll-deck conveyor (2) carried over guidance wheels (4) or the like, with a support strand (5) and a return strand (6), which roll-deck conveyor (2) can be driven in continuous circulation with translational velocity $v_{rost}$, and that the support rolls (3) can themselves be driven with angular velocity w, the product of which with the radius R of the support rolls (3), wR, varies in amount from and is in the opposite direction to the deck velocity $v_{rost}$, whereby when $v_{rost}$ exceeds wR the difference $v_{rost} - wR$ determines the transport velocity $v_{trans}$ of the panes of glass (1) in the direction of circulation of roll-deck conveyor (2), and when $v_{rost}$ is less than wR the difference $wR - v_{rost}$ determines the transport velocity $v_{trans}$ of the panes of glass (1) against the direction of circulation of roll-deck conveyor (2).

2. An installation according to Claim 1, characterized in that for driving purposes the support rolls (3) in the support strand (5) run on a roll drive track (7) which is similarly carried, as an endless band, over guidance wheels (8) or the like, and that the endless roll drive track (7) is driven with translational roll drive track velocity $v_{abw}$.

3. An installation according to Claim 2, characterized in that the support rolls (3) run on the roll drive track (7) with a circumference the radius of which corresponds to the support radius R, and that the roll drive track (7), in its area of contact with the support rolls (3), is driven in the same direction as the roll-deck conveyor (2), whereby the roll drive track velocity $v_{abw}$ corresponds to the transport velocity $v_{trans}$ of the panes of glass (1) in the direction of the translational velocity $v_{rost}$ of the roll-deck conveyor in support strand (5).

4. An installation according to Claim 2, characterized in that the support rolls (3) run on the roll drive track (7) with a circumference the radius of which corresponds to the support radius R, and that the roll drive track (7), in its area of contact with the support rolls (3), is driven in the opposite direction to the roll-deck conveyor (2), whereby the roll drive track velocity $v_{abw}$ corresponds to the transport velocity $v_{trans}$ of the panes of glass (1) in the opposite direction to the translational velocity $v_{rost}$ of the roll-deck conveyor (2) in support strand (5).

5. An installation according to one of Claims 1 to 4, characterized in that the deck velocity $v_{rost}$ and/or the roll drive track velocity $v_{abw}$ can be adjusted in accordance with the operational requirements.

6. An installation according to one of Claims 1 to 5, characterized in that the roll drive track (7) is constructed as an endless circulating chain and the support rolls (3) possess sprocket wheels, the pitch circle of which is arranged to be in accordance with the rolling periphery selected.

**Revendications**

1. Installation pour le traitement de feuilles de verre à l'état chaud et/ou de feuilles de verre à chauffer, notamment installation de précontrainte pour des feuilles de verre, comportant au moins un poste de traitement qui possède une grille à rouleaux comportant une multiplicité de rouleaux de soutien, et comportant un dispositif servant à empêcher l'affaissement des feuilles de verre devant être chauffées entre des rouleaux de soutien voisins, caractérisée en ce que la grille à rouleaux est réalisée sous la forme d'une bande formant grille à rouleaux (2) sans fin, guidée sur des rouleaux de renvoi (4) ou analogues et comportant un brin de soutien (5) et un brin de retour (6), laquelle bande formant grille à rouleaux (2) pouvant être entraînée selon une circulation sans fin à une vitesse de translation de grille $v_{grille}$, et que les rouleaux de soutien (3) peuvent être entraînés pour leur part à la vitesse angulaire w, dont le produit, wR, obtenu par multiplication par le rayon R des rouleaux de soutien (3) et dont la valeur diffère de la vitesse de grille $v_{grille}$, possède un signe opposé à celui de cette vitesse de grille $v_{grille}$, la différence $v_{grille} - wR$ pour $v_{grille} > wR$ déterminant la vitesse de transport $v_{trans}$ des feuilles de verre (1) dans la direction de circulation de la bande formant grille à rouleaux (2), et la différence $wR - v_{grille}$ pour $v_{grille} < wR$ déterminant la vitesse de transport $v_{trans}$ des feuilles de verre en sens opposé de la direction de circulation de la bande formant grille à rouleaux (2).

2. Installation suivant la revendication 1, caractérisée en ce que les rouleaux de soutien (3) présents au niveau du brin de soutien (5) roulent, en vue de réaliser l'entraînement, contre une piste de roulement (7) qui est également guidée sous la forme d'une bande sans fin sur des rouleaux de renvoi (8) ou analogue, et que la piste de roulement sans fin (7) est entraînée avec une vitesse de translation $v_{abw}$.

3. Installation selon la revendication 2, caractérisée par le fait que les rouleaux de soutien (3) roulent, avec une circonférence dont le rayon correspond au rayon de soutien R, contre la piste de roulement (7) et que cette piste de roulement (7) est entraînée, dans la zone de contact avec les rouleaux de soutien (3), dans le même sens que la bande formant grille à rouleaux (2), la vitesse

$v_{abw}$ de la piste de roulement correspond à la vitesse de transport $v_{trans}$ des feuilles de verre (1) suivant la direction de la vitesse de translation de grille $v_{grille}$ de la bande formant grille à rouleaux (2) au niveau du brin de soutien (5).

4. Installation selon la revendication 2, caractérisée en ce que les rouleaux de soutien (3) roulent, avec une circonférence dont le rayon correspond au rayon de soutien R, contre la piste de roulement (7) et que cette piste de roulement (7) est entraînée, dans la zone de contact avec les rouleaux de soutien (3), en sens inverse de la bande formant grille à rouleaux (2), la vitesse de la piste de roulement $v_{abw}$ correspondant à la vitesse de transport $v_{trans}$ des feuilles de verre (1) en sens opposé de la vitesse de translation de grille $v_{grille}$ de la bande formant grille à rouleaux (2) au niveau du brin de soutien (5).

5. Installation selon l'une des revendications 1 à 4, caractérisée en ce que la vitesse de grille $v_{grille}$ et/ou la vitesse de la piste de roulement $v_{abw}$ sont réglables conformément au fonctionnement.

6. Installation selon l'une des revendications 1 à 5, caractérisée en ce que la piste de roulement (7) est réalisée sous la forme d'une chaîne circulante sans fin et que les rouleaux de soutien (3) comportent une couronne dentée dont le cercle primitif est fixé en fonction de la circonférence choisie de roulement.

Fig.1

8
7
A
1
8
9
3
5
3
6
4
4
2

Fig.2

7(1)
wR
v trans(=v rost − wR)
R
w
5
3
3
v rost

Fig.3

7(1)
v trans(=wR − v rost)
R
wR
w
5
3
3
V rost